# EUROPEAN PATENT APPLICATION

(11) **EP 0 837 590 A2**
(43) Date of publication of application: **22.04.1998**
(21) Application number: 97117306.7
(22) Date of filing: 07.10.1997
(51) Int. Cl.: H04N 1/00

(54) **Mobile wireless apparatus for processing character and image information**

(30) Priority: 18.10.1996 JP 295921/96
(71) Applicant: MATSUSHITA ELECTRIC INDUSTRIAL CO., LTD., Kadoma-shi, Osaka 571 (JP)
(72) Inventor: Nakamoto, Kenji, Kawasaki-shi, Kanagawa 216 (JP)
(74) Representative: Grünecker, Kinkeldey, Stockmair & Schwanhäusser Anwaltssozietät

(57) **Abstract**

The invention relates to an apparatus for processing visual information such as facsimile and electronic mail information and, in particular, to a mobile wireless apparatus for processing character and image which is miniaturized, light-weighted and convenient for being carried. The mobile wireless apparatus having a facsimile function includes a data reading unit (10) for reading a facsimile transmission document, a display (8) for displaying a facsimile reception document, and an external connector terminal (11) to be connected to an external apparatus such as a printer, and does not include a printing mechanism for a facsimile reception document. Since it is not required to contain any facsimile papers therein, it is possible to make the apparatus miniaturize and light-weight.

## Description

### BACKGROUND OF THE INVENTION

The present invention relates to a mobile wireless apparatus for processing character and image information such as facsimile and electronic mail information and, in particular to a mobile wireless apparatus which is miniaturized and light-weighted so as to be convenient for being carried.

Recently, a mobile wireless apparatus such as a portable telephone has been developed so as to have a facsimile function. Such an apparatus is arranged as a portable telephone with a facsimile function by combining a mobile wireless apparatus and a facsimile apparatus. An example of such a portable telephone with a facsimile function is disclosed in JP-A-4-278766.

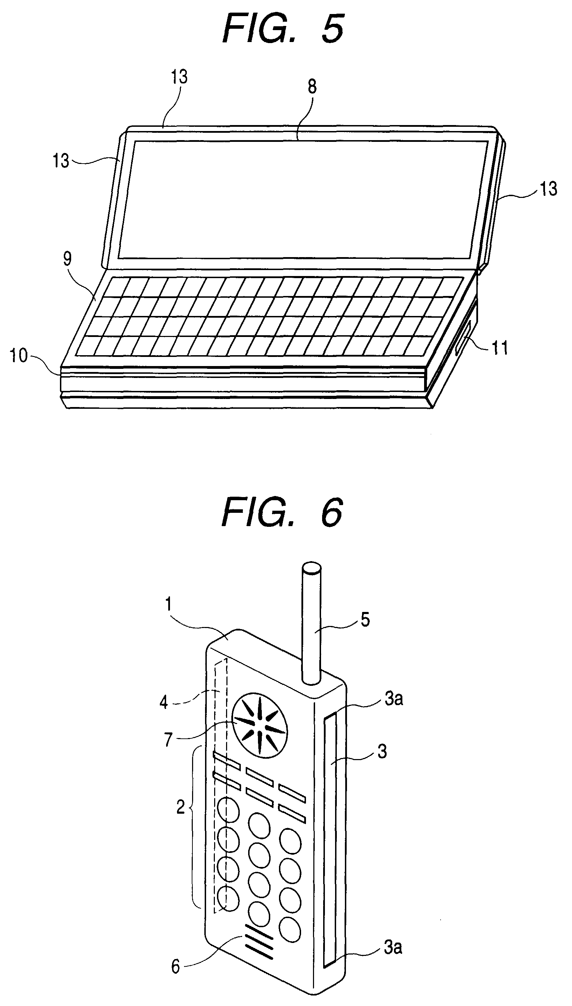

Such a portable telephone includes, as shown in Fig. 6, an antenna 5 on the upper side face of a casing 1, a keyboard 2, a microphone 6 and a speaker 7 on the front face of the casing 1, a reading unit 3 for a facsimile document on the right side face of the casing 1, and a writing unit 4 for preparing a hard copy on the left side face of the casing. A numeral 3a depicts a roller for taking a document into the reading unit 3 in accordance with read timing clocks.

Such an apparatus is capable of being used not only as a normal portable telephone but also as a mobile facsimile which reads a document through the reading unit 3 and performs facsimile transmission and prints out a facsimile reception information through the writing unit 4.

However, the conventional portable telephone with a facsimile function is configured such that facsimile papers for printing out the facsimile information are set within the apparatus. Accordingly, the weight of the apparatus including the facsimile papers becomes too large, and so it is inconvenient to carry the apparatus. Further, according to such a configuration of the conventional portable telephone, it is difficult to realize the miniaturization and light-weight of the apparatus.

### SUMMARY OF THE INVENTION

The present invention intends to solve the aforesaid problems of the prior art. In other word, an object of the present invention is to provide an apparatus for processing visual information such as facsimile, electronic mail information, and in particular to provide a mobile wireless apparatus for processing character and image which intends to make the apparatus miniaturize and light-weight and is convenient for being carried.

In order to achieve the aforesaid object, the mobile wireless apparatus according to the present invention is configured to comprise a data reading unit for reading a facsimile transmission document, a display for displaying a facsimile reception document, and an external connector terminal to be connected to an external apparatus such as a printer, but not to comprise a printing mechanism for a facsimile reception document.

Accordingly, since the mobile wireless apparatus according to the present invention is not required to contain any facsimile papers therein, it is possible to make the apparatus miniaturize and light-weight.

The invention recited in claim 1 of the present invention relates to a mobile wireless apparatus having a facsimile function which is configured to comprise a data reading unit for reading a facsimile transmission document, a display for displaying a facsimile reception document, and an external connector terminal to be connected to an external apparatus such as a printer, but not to comprise a printing mechanism for a facsimile reception document. According to such a configuration, it is possible to make the apparatus miniaturize and light-weight.

The invention recited in claim 2 is arranged to make it possible in the wireless apparatus of claim 1 to transmit and receive electronic mail or terminal communication information by changing a communication mode. According to such a configuration, it is possible to selectively execute the transmission and reception of the electronic mail or terminal communication information.

The invention recited in claim 3 is arranged in a manner that the mobile wireless apparatus is arranged in a note-type configuration capable of being folded in two. According to such a configuration, it is convenient to carry the apparatus.

The invention recited in claim 4 is arranged in a manner that the mobile wireless apparatus is provided with a connector terminal for line connection capable of being connected to a telephone line. According to such a configuration, it is possible to transmit data through a telephone line even in an area to which radio wave can not be transmitted.

The invention recited in claim 5 is arranged in a manner that the mobile wireless apparatus is provided with an adjusting dial for scrolling display contents of the display. According to such a configuration, it is possible to display a facsimile document so as to be easily seen and display efficiently even if the size of the display screen is small.

The invention recited in claim 6 is arranged in a manner that an antenna is disposed at the periphery of the display. According to such a configuration, since the antenna is provided as a part of the mobile wireless apparatus body, it is possible to operate the apparatus without paying attention to the antenna.

### BRIEF DESCRIPTION OF THE DRAWINGS

Fig. 1 is a perspective view showing the arrangement of the mobile wireless apparatus for processing character and image according to the first embodiment of the present invention.

Fig. 2 is a perspective view showing a state that the mobile wireless apparatus for processing character and image according to the first embodiment is folded in two.

Fig. 3 is a perspective view showing the arrangement of the mobile wireless apparatus for processing character and image according to the second embodiment of the present invention.

Fig. 4 is a perspective view showing the arrangement of the mobile wireless apparatus for processing character and image according to the third embodiment of the present invention.

Fig. 5 is a perspective view showing the arrangement of the mobile wireless apparatus for processing character and image according to the fourth embodiment of the present invention.

Fig. 6 is a perspective view showing the arrangement of the conventional mobile wireless apparatus having a facsimile function.

### DETAILED DESCRIPTION OF THE PREFERRED EMBODIMENTS

Respective embodiments for carrying out the present invention will be explained with reference to the drawings.

### (First embodiment)

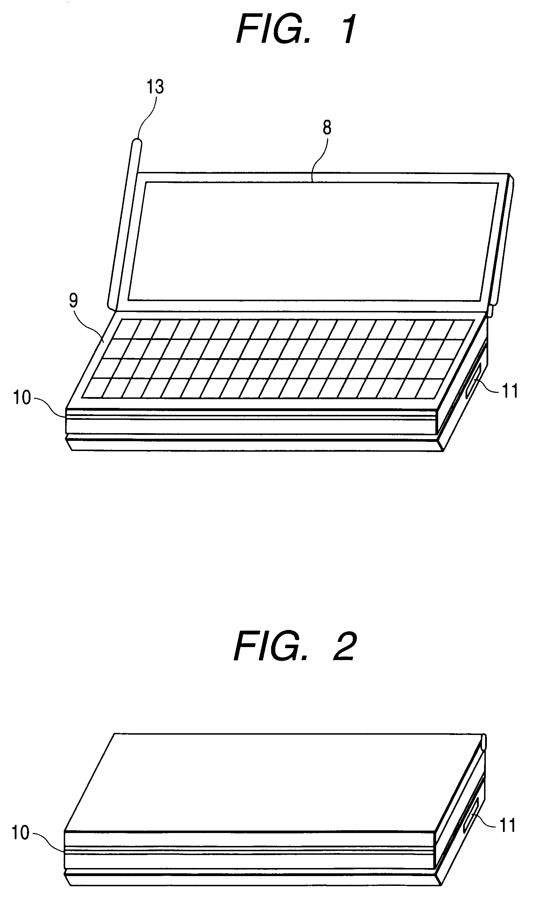

The mobile wireless apparatus for processing character and image according to the first embodiment includes a facsimile function, an electronic mail function and a terminal communication function. The apparatus is provided with, as shown in Fig. 1, a communication antenna 13, a display 8 for displaying characters and images, an information input means 9 for inputting telephone numbers and sentences, a facsimile document reading unit 10 for reading a facsimile document to be transmitted and an external connector terminal 11 to be connected to an external apparatus such as a printer.

Further, the apparatus includes therein, like the normal mobile wireless apparatus, a radio unit for modulating and demodulating a transmission and a reception signals of various communication modes, a signal processing unit for performing the base-band processing as to the transmission and reception signals of the various communication modes, and further a memory unit for storing transmission and reception data and a control unit for controlling the operation of the respective units of the apparatus.

Furthermore, the apparatus has a note-shaped configuration and the apparatus can be deformed in a small-size as shown in Fig. 2 by folding the display 8 to the information input means 9 side.

The apparatus is arranged that the information input means 9 has a sentence input function, so that when a user inputs a sentence through the information input means 9, the inputted sentence is displayed on the display 8 and simultaneously stored in the memory unit.

Subsequently, when the electronic mail or the terminal communication is designated as the kind of communication and a telephone number or a terminal number of a destination is inputted through the information input means 9, the control unit instructs the respective units to change the communication mode into one thus designated. As a consequence, the sentence stored in the memory unit is radio-transmitted to the destination from the antenna 13 through the processings of the signal processing unit and the radio unit.

The information received through the electronic mail or the terminal communication is stored in the memory unit through the processings of the radio unit and the signal processing unit, and then displayed on the display 8 in accordance with the display instruction by a user.

In the case of the facsimile transmission, when a facsimile document is inserted into the facsimile document reading unit 10 and a destination telephone number is input through the information input means 9, the control unit instructs the respective units to change the communication mode into the facsimile communication mode. As a consequence, the document thus read by the facsimile document reading unit 10 is radio-transmitted to the destination from the antenna 13 through the processings of the signal processing unit and the radio unit.

The facsimile document received is stored in the memory unit through the processings of the radio unit and the signal processing unit, and then displayed on the display 8 in accordance with the display instruction by a user.

The facsimile document thus stored in the memory unit is printed out by connecting the external connector terminal 11 to a printer.

By connecting the external connector terminal 11 to a data storage apparatus, it is possible to record, in the data storage apparatus, the facsimile document stored in the memory unit or the communication contents of the electronic mail or the terminal communication. Further, by connecting the external connector terminal 11 to a personal computer, it is possible to transfer data from the apparatus to the personal computer.

In this manner, since the mobile wireless apparatus is arranged to display the facsimile document received on the display, it is not necessary to contain facsimile papers therein. As a consequence, it is possible to make the apparatus miniaturize and light-weight. Further, when it is required to print out a facsimile document, such a requirement can be realized by connecting the external connector terminal 11 to a printer.

### (Second embodiment)

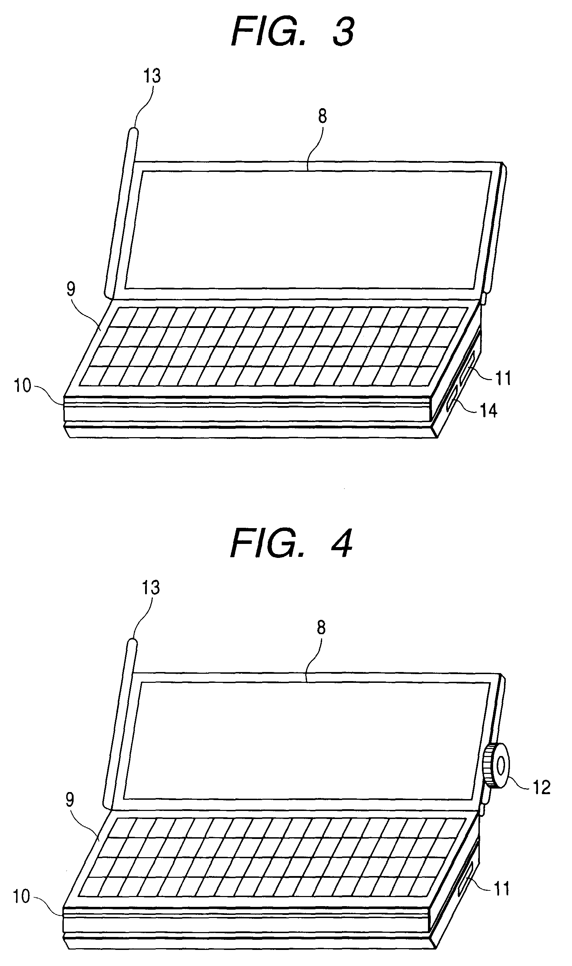

A mobile wireless apparatus for processing character and image according to the second embodiment is provided with a connector terminal 14 for line connection, as shown in Fig. 3. Other arrangement of the apparatus is the same as that of the first embodiment (Figs. 1 and 2).

This apparatus is capable of performing the wire communication as well as the wireless communication since the apparatus can be connected to a telephone line by the connector terminal 14 for line connection. Accordingly, it is possible to perform facsimile, electronic mail and terminal communications through a telephone line even in an area to which radio wave can not be transmitted.

### (Third embodiment)

A mobile wireless apparatus for processing character and image according to the third embodiment is provided with an adjusting dial 12 for scrolling the display contents of the display 8 , as shown in Fig. 4. Other arrangement of the apparatus is the same as that of the first embodiment (Figs. 1 and 2).

According to this apparatus, since the reading location of the memory unit is designated by the adjusting dial 12, a facsimile document displayed on the display 8 can be scrolled upward and downward by rotating the adjusting dial 12 clockwise and counterclockwise. The display contents scrolls slowly when the adjusting dial 12 is rotated slowly, while the display contents scrolls quickly when the adjusting dial is rotated quickly.

Accordingly, while a user looks at a received facsimile document by operating the adjusting dial 12, a user is able to skip through a portion of the received facsimile document in which the user has little interest and is able to read an interested portion slowly and carefully.

As described above, according to the apparatus, it is possible to improve the legibility of a received document by operating the adjusting dial 12, so that it is possible to compensate such a disadvantage that the display area of the display has been smaller due to the miniaturization of the apparatus. Further, it is possible to operate the apparatus efficiently by using the adjusting dial since the scrolling function can be performed with less trouble as compared with the case of using a key board.

### (Fourth embodiment)

A mobile wireless apparatus for processing character and image according to the fourth embodiment is provided with an antenna 13 for transmission and reception at the periphery of the display 8, as shown in Fig. 5. Other arrangement of the apparatus is the same as that of the first embodiment (Figs. 1 and 2).

According to the apparatus, since the antenna 13 is provided at the periphery of the display 8 as a part of the mobile wireless apparatus body, the presence of the antenna does not attract attention and hence does not spoil the appearance of the apparatus. Further, since such a case that a hand or a thing hits or strikes the antenna can be decreased, it is possible to operate the mobile wireless apparatus without paying much attention to the handling of the antenna.

As clear from the aforesaid description, according to the present invention, since the printing function of a facsimile document is eliminated, the miniaturization and light-weight of the apparatus can be realized, and hence the mobile wireless apparatus which is convenient for being carried and having functions such as a facsimile, electronic mail or the like is realized.

In the apparatus provided with the connector terminal for line connection, it is possible to transmit data through a line even in an area to which radio wave can not be transmitted.

In the apparatus provided with the dial for scrolling display contents of the display, it is possible to perform easily seen display even if the size of the display screen is small.

In the apparatus being arranged such that the antenna is disposed at the periphery of the display, it is possible to operate the apparatus without paying attention to the handling of the antenna.

## Claims

1. A mobile wireless apparatus having a facsimile function for processing character and image information, said mobile wireless apparatus comprising:
an antenna for receiving and transmitting information in a wireless fashion;
a data reading unit for reading a document to be transmitted via facsimile function;
a display for displaying a document received via facsimile function; and
an external connector terminal connectable to an external apparatus so that said document received via facsimile function is printed out from said external apparatus.

2. A mobile wireless apparatus according to claim 1, further comprising:
means for changing communication mode so that said mobile wireless apparatus is capable of transmitting and receiving electronic mail or terminal communication information.

3. A mobile wireless apparatus according to claim 1 or 2, wherein said mobile wireless apparatus is arranged in a note-type configuration capable of being folded in two.

4. A mobile wireless apparatus according to any one of claims 1 to 3, further comprising:
a connector terminal for line connection capable of being connected to a telephone line.

5. A mobile wireless apparatus according to any one of claims 1 to 4, further comprising:
an adjusting dial for scrolling display contents on said display.

6. A mobile wireless apparatus according to any one of claims 1 to 5, wherein an antenna is disposed at a periphery of said display.

7. A mobile wireless apparatus according to any one of claims 1 to 6, wherein said document received via facsimile can be printed out exclusively when said external connector is connected to said external device.
